# FASCICULE DE BREVET EUROPEEN

(11) **EP 2 533 125 B1**
(45) Date de publication et mention de la délivrance du brevet: **29.06.2016**
(21) Numéro de dépôt: 12166724.0
(22) Date de dépôt: 04.05.2012
(51) Int. Cl.: G05D 11/13

(54) **Procédé de conditionnement d'un mélange gazeux NO/N2**
Verfahren zur Verpackung eines NO/N2 Gasgemisches
method for packaging a NO/N2 gas mixture

(30) Priorité: 09.06.2011 FR 1155037
(43) Date de publication de la demande: 12.12.2012
(73) Titulaire: L'AIR LIQUIDE, SOCIETE ANONYME POUR L'ETUDE ET L'EXPLOITATION DES PROCEDES GEORGES CLAUDE, 75007 Paris (FR); Air Liquide Santé (International), 75007 Paris (FR); Air Liquide Santé France, 75007 Paris (FR)
(72) Inventeur: De Villemeur, Pierre, 78430 LOUVECIENNES (FR); Samirant, Joël, 93110 ROSNY SOUS BOIS (FR); Zerbinatti, Celso, 78530 BUC (FR)
(74) Mandataire: Pittis, Olivier

(56) Documents cités:
- WO-A2-2005/110441
- FR-A1- 2 890 761
- FR-A1- 2 914 393
- US-A1- 2006 060 139

## Description

L'invention concerne un procédé de conditionnement d'un mélange gazeux NO/N₂ dans un récipient, en particulier une ou plusieurs bouteilles de gaz.

Les mélanges gazeux NO/N₂ sont couramment utilisés pour traiter les vasoconstrictions pulmonaires chez l'adulte ou l'enfant, en particulier chez les nouveaux nés souffrant d'hypertension pulmonaire primitive ou chez les patients subissant une opération de chirurgie cardiaque.

Ces mélanges NO/N₂ sont classiquement conditionnés dans des bouteilles de gaz en acier. Typiquement, ces bouteilles contiennent de 100 à 1000 ppm en volume de NO et de l'azote (N₂) pour le reste. Ces bouteilles ont habituellement une contenance en eau de 2 à 50 litres, ce qui permet d'y introduire une charge totale pouvant aller jusqu'à 15 m³ de mélange NO/N₂.

WO2005/110441 divulgue un tel procédé de conditionnement de mélange gazeux NO/ N₂ de l'état de l'art.

Un procédé de fourniture de mélange gazeux en deux étapes est connu par exemple du document US2006/0060139.

Le conditionnement, c'est-à-dire la mise en bouteille de ces mélanges, se fait dans des centres de conditionnement de gaz.

Toutefois, compte-tenu de la faible teneur en NO dans le mélange, à savoir typiquement de l'ordre de quelques centaines de ppm en volume, le conditionnement de ces mélanges n'est pas toujours aisé à réaliser au plan industriel et une précision suffisante du mélange obtenu n'est pas toujours assurée.

Le problème est dès lors de proposer un procédé de conditionnement amélioré permettant d'assurer une bonne précision et une fiabilité accrue du mélange gazeux ainsi fabriqué et conditionné.

La solution de l'invention est alors un procédé de conditionnement d'un mélange gazeux NO/N₂ dans un récipient, en particulier une ou plusieurs bouteilles de gaz, comprenant les étapes de :
a) introduire dans un récipient un prémélange gazeux formé de NO et de N₂ contenant une teneur en NO inférieure à 10% en volume jusqu'à atteindre une première pression P1 avec P1 > 1 bar abs,
b) introduire dans le récipient contenant le prémélange NO/N₂ à la première pression P1, de l'azote gazeux jusqu'à obtenir un mélange gazeux final NO/N₂ contenant une teneur en NO inférieure ou égale à 1200 ppm en volume et une deuxième pression P2 comprise entre P1 et 800 bar.

Selon le cas, le procédé de l'invention peut comprendre l'une ou plusieurs des caractéristiques techniques suivantes :
- la première pression P1 est comprise entre 2 et 10 bar, de préférence inférieure ou égale à 5 bar.
- la deuxième pression est comprise entre 100 et 700 bar, de préférence d'au moins 200 bar.
- le prémélange gazeux formé de NO et de N₂ contient une teneur en NO inférieure ou égale à 8% en volume.
- le prémélange gazeux formé de NO et de N2 contient une teneur en NO inférieure ou égale à 5% en volume.
- le prémélange gazeux formé de NO et de N₂ contient une teneur en NO de l'ordre de 4% en volume et la première pression P1 est de l'ordre de 2 à 10 bar abs, par exemple de l'ordre de 2 à 5 bar abs.
- l'étape a) est précédée d'au moins une étape choisie parmi :
   - une étape de rinçage gazeux durant laquelle de l'azote est introduit dans le récipient,
   - une étape de purge durant laquelle le volume interne du récipient est mis en communication fluidique avec l'atmosphère ambiante, et/ou
   - une étape de mise sous vide durant laquelle le volume interne du récipient est mis en dépression (< pression atm).
- l'étape de rinçage gazeux comprennent l'introduction d'azote gazeux dans le récipient jusqu'à obtenir une pression de rinçage comprise entre 2 et 20 bar, de préférence entre 2 et 12 bar.
- durant la ou les étapes de purge, le volume interne du récipient est en communication fluidique avec l'atmosphère tant que la pression interne du récipient est supérieure à une pression minimale de purge (Pmin) telle que : 3,5 bar > Pmin > 1 bar.
- la pression minimale de purge (Pmin) est comprise entre 1,1 et 3 bar environ.
- durant au moins une étape de mise sous vide, le volume interne du récipient est mis en dépression jusqu'à atteindre une dépression inférieure à 0,5 bar, de préférence inférieure à 0,2 bar.
- il comprend, préalablement à l'étape a), une étape de mise sous vide et une étape de purge d'au moins un flexible reliant une rampe de remplissage à un récipient de gaz.
- le mélange gazeux final NO/N₂ contient une teneur en NO inférieure ou égale à 1000 ppm en volume, de préférence le mélange gazeux final NO/N₂ contient une teneur en NO comprise entre 200 et 1000 ppm en volume, de préférence encore entre 200 et 800 ppm en volume.
- il est mis en oeuvre par le biais d'une rampe de conditionnement de récipients de gaz comprenant des moyens de raccordement permettant de remplir plusieurs récipients à la fois.
- le récipient est une bouteille de gaz, de préférence une bouteille de gaz à corps en acier, en aluminium ou un alliage d'aluminium.

Dans le cadre de la présente invention, les pressions données sont des pressions absolues.

L'invention va maintenant être mieux comprise grâce à la description donnée ci-après en référence aux Figures annexées parmi lesquelles :
- la Figure 1 schématise un mode de réalisation du procédé selon la présente invention et
- la Figure 2 représente le schéma d'une installation de mise en oeuvre du procédé de l'invention.

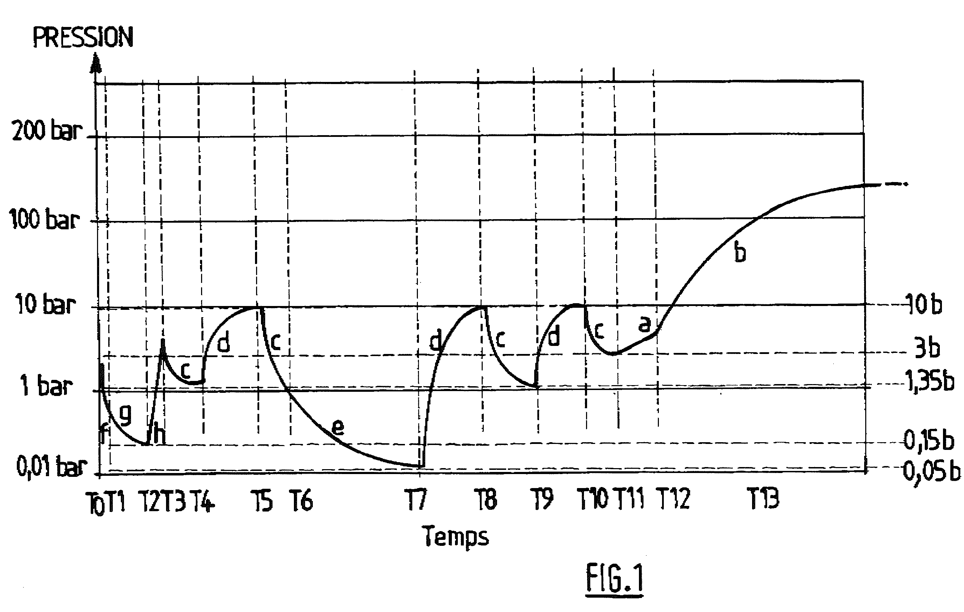

La Figure 1 schématise un mode de réalisation d'un cycle de conditionnement applicable dans le cadre du procédé de conditionnement de mélange gazeux NO/N₂ de la présente invention. Comme on le voit, ce cycle de conditionnement comporte plusieurs étapes successives, s'échelonnant au fil du temps de T0 à T13, qui sont appliquées à chaque bouteille et qui sont détaillées ci-après.

Entre T0 et T1, les flexibles de l'installation sont vidés à l'air libre, c'est-à-dire que le volume interne des flexibles de remplissage est mis en communication fluidique avec l'atmosphère ambiante pour évacuer toute surpression résiduelle éventuelle. Durant cette phase, le ou les robinets de récipients de gaz connectés aux flexibles sont fermés, donc aucun échange de gaz n'a lieu avec le ou les récipients. Ceci correspond à l'étape f) du procédé.

Entre T1 et T2, on utilise une pompe à vide pour mettre l'intérieur des flexibles en dépression de branchement, c'est-à-dire à une pression inférieure à la pression atmosphérique, par exemple de l'ordre de 0,15 bar, ce qui permet d'évacuer le gaz résiduel et/ou l'air qui s'y trouvent. Cette phase est donc aussi réalisée robinet fermée. La mise sous vide des flexibles est une sécurité qui permet de vérifier le bon raccordement de tous les flexibles et l'absence de fuite. En effet, en cas de fuite ou de raccordement incorrect d'un flexible le vide ne sera pas établi de manière stable. Ceci correspond à l'étape g) du procédé schématisé en Figure 1.

Entre T2 et T3, l'opérateur ouvre le robinet de chaque bouteilles et la pression résiduelle présente dans chaque bouteille remonte alors jusqu'au capteur de pression, lequel détecte ladite remontée de pression. Typiquement, la pression résiduelle de la bouteille est de l'ordre d'environ 3 à 4 bar absolus. Après T2, aucun rinçage gazeux du récipient avec de l'azote n'a encore eu lieu. Ceci correspond à l'étape h) du procédé schématisé en Figure 1.

Entre T3 et T4, commence le traitement proprement dit de chaque bouteille. Plus précisément, chaque bouteille est à mise à l'atmosphère, c'est-à-dire qu'on laisse s'échapper le gaz contenu dans la bouteille vers l'atmosphère extérieur sous le simple effet de la différence de pression entre intérieur et extérieur de la bouteille de manière à porter la pression interne de la bouteille à la pression atmosphérique. Ceci correspond à une étape c) du procédé de l'invention. A T4, la pression interne de la bouteille de gaz est donc sensiblement égale à la pression atmosphérique (1 atm = environ 1 bar absolu), c'est-à-dire de l'ordre de 1 à 1,5 bar abs.

Entre T4 et T5, la bouteille subit un rinçage avec de l'azote pendant lequel sa pression interne est portée à environ 10 bar. L'adjonction d'azote se fait via une canalisation de gaz et/ou un stockage d'azote sous pression de manière à porter la pression interne de la bouteille à la pression désirée. Ceci correspond à l'étape d) du procédé de l'invention.

Entre T5 et T6, l'azote contenu dans la bouteille est à nouveau échappé à l'atmosphère, ce qui permet d'éliminer les impuretés éventuellement présentes dans la bouteille. Ceci correspond à une nouvelle étape c) de purge du procédé de l'invention.

Entre T6 et T7, la bouteille est purgée par mise en dépression de son volume interne par soutirage du gaz résiduel qui s'y trouve au moyen d'une pompe à vide jusqu'à obtenir une dépression interne inférieure à 0,2 bar abs, de préférence inférieure à 0,1 bar, par exemple de l'ordre de 0,05 bar. Ceci correspond à une nouvelle étape e) du procédé de l'invention.

Entre T7 et T8, la bouteille subit un nouveau rinçage à l'azote jusqu'à porter sa pression interne à 10 bar environ, comme entre T4 et T5. Ceci correspond à une nouvelle étape d) du procédé de l'invention.

Entre T8 et T9, la bouteille subit un nouvel échappement vers l'atmosphère ambiant comme pendant les temps T5 et T6. La pression résiduelle gazeuse est alors maintenue à environ 1,35 bar pour éviter une entrée intempestive de contaminants atmosphériques. Ceci correspond à une nouvelle étape c) du procédé de l'invention.

Entre T9 et T10, la bouteille subit encore un rinçage supplémentaire à l'azote jusqu'à porter sa pression interne à 10 bar environ, comme précédemment. Ceci correspond à une nouvelle étape d) du procédé de l'invention.

Entre T10 et T11, l'azote est échappé à l'atmosphère, comme entre T8 et T9 et entre T5 et T6, mais en maintenant cette fois une pression résiduelle interne de l'ordre de 3 bar. Ceci correspond à une étape c) du procédé de l'invention.

Entre T11 et T12, on introduit dans la bouteille, un prémélange gazeux formé de NO et de N₂ contenant une teneur en NO inférieure à 10% en volume jusqu'à atteindre une première pression de remplissage P1 avec P1 > 1 bar, typiquement une pression P1 de l'ordre de 2 à 10 bar abs, préférentiellement de 3 à 5 bar abs environ, par exemple une pression P1 de l'ordre de 4 bar. Avantageusement, le prémélange gazeux formé de NO et de N₂ contient une teneur en NO de l'ordre de 4 % en volume. Ceci correspond à une étape a) du procédé de l'invention

Entre T12 et T13, on introduit ensuite dans le récipient contenant le prémélange NO/N₂ à la première pression P1, de l'azote gazeux jusqu'à obtenir un mélange gazeux final NO/N₂ contenant une teneur en NO inférieure ou égale à 1200 ppm en volume, par exemple une teneur finale de NO de 200 à 800 ppm, et une deuxième pression P2 comprise entre P1 et 800 bar, par exemple ici une pression de 180 à 200 bar. Ceci correspond à une étape b) du procédé de l'invention

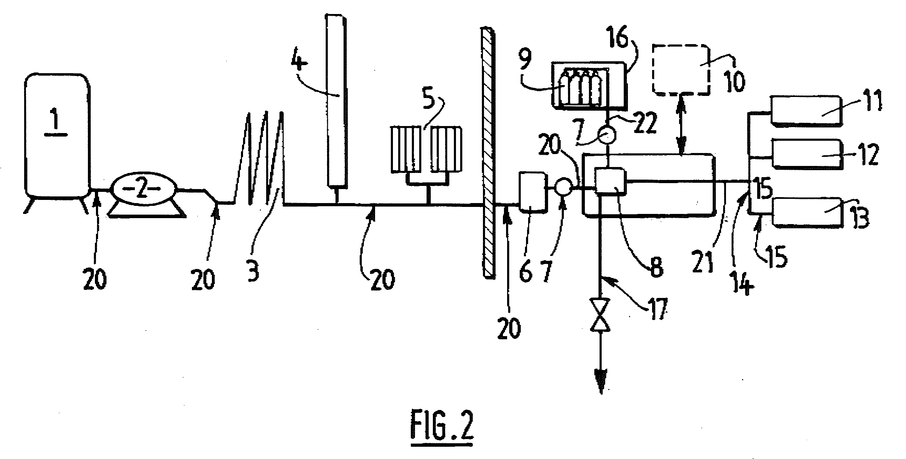

Ce procédé peut être mis en oeuvre par le biais d'une installation telle que décrite en Figure 2 comprenant une ou plusieurs rampes 14 de conditionnement de récipients de gaz, c'est-à-dire de bouteilles 11 à 13 de gaz, comprenant des moyens de raccordement, notamment des flexibles, permettant de remplir plusieurs récipients à la fois, typiquement de 2 à 20 bouteilles concomitamment.

L'azote est stocké dans le réservoir 1 sous forme liquide puis soutiré sous forme liquide par une pompe cryogénique 2 qui le comprime à une pression de l'ordre de 100 à 300 bar, avant de l'envoyer vers un réchauffeur atmosphérique 3 où il est vaporisé de manière à obtenir de l'azote gazeux. Comme on le voit, elle comprend une canalisation ou ligne principale 20 permettant de véhiculer de l'azote depuis un réservoir 1 jusqu'à la rampe 14 de conditionnement. En fait, la pression dans la ligne varie entre environ 100 bar immédiatement en aval de l'écoulement de la capacité tampon dans les bouteilles et environ 260 bar qui correspond au seuil d'arrêt de la pompe.

L'azote gaz est ensuite véhiculé par la ligne 20 vers un dispositif de purification 6 permettant d'éliminer les traces de O₂ et H₂O, par exemple un tamis moléculaire adapté, par exemple de type zéolite, gel de silice, alumine ou analogue, ou leurs mélanges.

Il est à noter que la ligne 20 est aussi reliée fluidiquement à une capacité tampon 4 permettant de stocker une partie de l'azote gazeux, ainsi qu'à des cadres de secours 5 comprenant chacun plusieurs bouteilles d'azote.

Par ailleurs, l'installation comprend également une armoire 16 comprenant plusieurs bouteilles 9 d'un prémélange de NO/N₂ contenant ici 4% en volume de NO, lesquels bouteilles 9 sont reliées fluidiquement à la ligne 20 par une ligne d'alimentation 22 en prémélange NO/N₂.

En fait, les lignes de NO/N₂ 22 et d'azote 20 ne sont pas reliées directement l'une à l'autre mais elles sont reliées au bloc à vanne 8 qui est lui relié par la ligne 21 à la ou aux rampes 14. Les vannes du bloc à vannes 8 permettent de choisir le fluide avec lequel on remplit les bouteilles 11 à 13 de la rampe 14. Les lignes d'azote 20 et de prémélange NO/N₂ 22 sont donc reliées fluidiquement d'abord par le bloc à vannes 8, puis un tronçon commun 21 à la rampe de remplissage 14. Le bloc à vannes 8 comprend des vannes, des éléments de pilotage commandés par le dispositif de pilotage 10...

Des débitmètres 7 permettent de mesurer la quantité de N₂ et de NO circulant dans les lignes 20 et 22, et de transmettre les informations mesurées à un dispositif de pilotage 10, tel un ordinateur ou analogue.

L'installation comprend également une ligne de mise à l'atmosphère 17 permettant d'évacuer les gaz vers l'atmosphère ambiante, notamment pendant la ou les étapes de purge durant laquelle le volume interne du récipient est mis en communication fluidique avec l'atmosphère ambiante.

Une pompe à vide (non montrée) permet d'opérer la ou les mises sous vide des récipients, c'est-à-dire de faire diminuer leur pression interne jusqu'à obtenir une pression inférieure à la pression atmosphérique, i.e. < 1 bar absolu.

## Revendications

1. Procédé de conditionnement d'un mélange gazeux NO/N₂ dans un récipient comprenant les étapes de :
a) introduire dans un récipient un prémélange gazeux formé de NO et de N₂ contenant une teneur en NO inférieure à 10% en volume jusqu'à atteindre une première pression P1 avec P1 > 1 bar,
b) introduire dans le récipient contenant le prémélange NO/N₂ à la première pression P1, de l'azote gazeux jusqu'à obtenir un mélange gazeux final NO/N₂ contenant une teneur en NO inférieure ou égale à 1200 ppm en volume et une deuxième pression P2 comprise entre P1 et 800 bar.

2. Procédé selon la revendication précédente, **caractérisé en ce que** la première pression P1 est comprise entre 2 et 10 bar, de préférence inférieure ou égale à 5 bar.

3. Procédé selon l'une des revendications précédentes, **caractérisé en ce que** la deuxième pression est comprise entre 100 et 700 bar, de préférence d'au moins 200 bar.

4. Procédé selon l'une des revendications précédentes, **caractérisé en ce que** le prémélange gazeux formé de NO et de N₂ contient une teneur en NO inférieure ou égale à 8% en volume.

5. Procédé selon l'une des revendications précédentes, **caractérisé en ce que** le prémélange gazeux formé de NO et de N2 contient une teneur en NO inférieure ou égale à 5% en volume.

6. Procédé selon l'une des revendications précédentes, **caractérisé en ce que** le prémélange gazeux formé de NO et de N₂ contient une teneur en NO de l'ordre de 4% en volume et la première pression P1 est de l'ordre de 4 bar.

7. Procédé selon l'une des revendications précédentes, **caractérisé en ce que** l'étape a) est précédée d'au moins une étape choisie parmi :
- une étape d) de rinçage gazeux durant laquelle de l'azote est introduit dans le récipient,
- une étape c) de purge durant laquelle le volume interne du récipient est mis en communication fluidique avec l'atmosphère ambiante, et
- une étape e) de mise sous vide durant laquelle le volume interne du récipient est mis en dépression (< pression atm).

8. Procédé selon l'une des revendications précédentes, **caractérisé en ce que** l'étape a) est précédée de plusieurs étapes, successives et cycliques, de rinçage gazeux d) et de purge c).

9. Procédé selon l'une des revendications précédentes, **caractérisé en ce que** la ou les étapes d) de rinçage gazeux comprennent l'introduction d'azote gazeux dans le récipient jusqu'à obtenir une pression de rinçage comprise entre 2 et 20 bar, de préférence entre 2 et 12 bar.

10. Procédé selon l'une des revendications précédentes, **caractérisé en ce que**, durant la ou les étapes c) de purge, le volume interne du récipient est en communication fluidique avec l'atmosphère tant que la pression interne du récipient est supérieure à une pression minimale de purge (Pmin) telle que : 3,5 bar > Pmin > 1 bar.

11. Procédé selon la revendication 10, **caractérisé en ce que** la pression minimale de purge (Pmin) est comprise entre 1,1 et 3 bar environ.

12. Procédé selon l'une des revendications précédentes, **caractérisé en ce que** durant au moins une étape e) de mise sous vide, le volume interne du récipient est mis en dépression jusqu'à atteindre une dépression inférieure à 0,5 bar, de préférence inférieure à 0,2 bar.

13. Procédé selon l'une des revendications précédentes, **caractérisé en ce que** le mélange gazeux final NO/N₂ contient une teneur en NO inférieure ou égale à 1000 ppm en volume, de préférence le mélange gazeux final NO/N₂ contient une teneur en NO comprise entre 200 et 1000 ppm en volume, de préférence encore entre 200 et 800 ppm en volume.

14. Procédé selon l'une des revendications précédentes, **caractérisé en ce qu'**il est mis en oeuvre par le biais d'une rampe (14) de conditionnement de récipients de gaz comprenant des moyens de raccordement permettant de remplir plusieurs récipients à la fois.

15. Procédé selon l'une des revendications précédentes, **caractérisé en ce que** le récipient est une bouteille (11, 12, 13) de gaz, de préférence une bouteille de gaz à corps en acier, en aluminium ou un alliage d'aluminium.

## Patentansprüche

1. Verfahren zum Verpacken einer Gasmischung NO/N₂ in einen Behälter, umfassend die folgenden Schritte:
a) Einführen in einen Behälter einer Gasvormischung, gebildet aus NO und N₂, enthaltend einen NO-Gehalt von weniger als 10 Vol-%, bis ein erster Druck P1 mit P1> 1 bar erreicht wird,
b) Einführen in den Behälter, der die Vormischung NO/N₂ unter dem ersten Druck P1 enthält, von Stickstoffgas, bis ein endgültiges Gasgemisch NO/N₂ erhalten wird, enthaltend einen NO-Gehalt von weniger als oder gleich 1200 Volumen-ppm und einen zweiten Druck P2, der zwischen P1 und 800 bar liegt.

2. Verfahren nach dem vorhergehenden Anspruch, **dadurch gekennzeichnet, dass** der erste Druck P1 zwischen 2 und 10 bar liegt, vorzugsweise unter oder gleich 5 bar.

3. Verfahren nach einem der vorhergehenden Ansprüche, **dadurch gekennzeichnet, dass** der zweite Druck zwischen 100 und 700 bar liegt, vorzugsweise mindestens 200 bar.

4. Verfahren nach einem der vorhergehenden Ansprüche, **dadurch gekennzeichnet, dass** die Gasvormischung, gebildet aus NO und N₂, einen NO-Gehalt von weniger als oder gleich 8 Vol-% enthält.

5. Verfahren nach einem der vorhergehenden Ansprüche, **dadurch gekennzeichnet, dass** die Gasvormischung, gebildet aus NO und N₂, einen NO-Gehalt von weniger als oder gleich 5 Vol-% enthält.

6. Verfahren nach einem der vorhergehenden Ansprüche, **dadurch gekennzeichnet, dass** die Gasvormischung, gebildet aus NO und N₂, einen NO-Gehalt im Bereich von 4 Vol-% enthält und der erste Druck P1 im Bereich von 4 bar liegt.

7. Verfahren nach einem der vorhergehenden Ansprüche, **dadurch gekennzeichnet, dass** Schritt a) mindestens ein Schritt vorausgeht, ausgewählt aus:
- einem Schritt d) des Gasspülens, während dessen Stickstoff in den Behälter eingeführt wird,
- einen Schritt c) des Entlüftens, während dessen das innere Volumen des Behälters in fluidische Kommunikation mit der umgebenden Atmosphäre gebracht wird, und
- einen Schritt e) Herstellens eines Vakuums, während dessen das innere Volumen des Behälters einem Unterdruck ausgesetzt wird (< Druck atm).

8. Verfahren nach einem der vorhergehenden Ansprüche, **dadurch gekennzeichnet, dass** Schritt a) mehrere Schritte, aufeinander folgend oder zyklisch, des Gasspülens d) und des Entlüftens c) vorausgehen.

9. Verfahren nach einem der vorhergehenden Ansprüche, **dadurch gekennzeichnet, dass** der oder die Schritte d) des Gasspülens das Einführen von Stickstoffgas in den Behälter umfassen, bis ein Spüldruck erreicht wird, der zwischen 2 und 20 bar, vorzugsweise zwischen 2 und 12 bar liegt.

10. Verfahren nach einem der vorhergehenden Ansprüche, **dadurch gekennzeichnet, dass** während des Schritts oder der Schritte c) des Entlüftens das innere Volumen des Behälters in fluidischer Kommunikation mit der Atmosphäre steht, so dass der innere Druck des Behälters größer als ein minimaler Entlüftungsdruck (Pmin) ist, so dass: 3,5 bar > Pmin > 1 bar.

11. Verfahren nach Anspruch 10, **dadurch gekennzeichnet, dass** der minimale Entlüftungsdruck (Pmin) ungefähr zwischen 1,1 und 3 liegt.

12. Verfahren nach einem der vorhergehenden Ansprüche, **dadurch gekennzeichnet, dass** während mindestens eines Schritts e) des Herstellens eines Vakuums das innere Volumen des Behälters einem Unterdruck ausgesetzt wird, bis ein Unterdruck von weniger als 0,5 bar, vorzugsweise weniger als 0,2 bar erreicht wird.

13. Verfahren nach einem der vorhergehenden Ansprüche, **dadurch gekennzeichnet, dass** die endgültige Gasmischung NO/N₂ einen NO-Gehalt enthält, der kleiner oder gleich 1000 Volumen-ppm ist, vorzugsweise die endgültige Gasmischung NO/N₂ einen NO-Gehalt enthält, der zwischen 200 und 1000 Volumen-ppm liegt, noch bevorzugter zwischen 200 und 800 Volumen-ppm.

14. Verfahren nach einem der vorhergehenden Ansprüche, **dadurch gekennzeichnet, dass** es mit Hilfe einer Rampe (14) zur Verpackung, von Gasbehältern durchgeführt wird, umfassend Verbindungsmittel, die ermöglichen, mehrere Behälter gleichzeitig zu füllen.

15. Verfahren nach einem der vorhergehenden Ansprüche, **dadurch gekennzeichnet, dass** der Behälter eine Gasflasche (11, 12, 13) ist, vorzugsweise eine Gasflasche mit einem Körper aus Stahl, aus Aluminium oder einer Aluminiumlegierung.

## Claims

1. Method for filling a NO/N₂ gas mixture in a vessel comprising steps for:
a) introducing into a vessel a gas premixture formed from NO and N₂ containing a NO content less than 10% by volume until a first pressure P1 is reached, where P1 > 1 bar,
b) introducing into the vessel containing the NO/N₂ premixture at the first pressure P1, nitrogen gas until a final NO/N₂ gas mixture containing a NO content less than or equal to 1200 ppm by volume and a second pressure P2 between P1 and 800 bar are obtained.

2. Method according to the preceding claim, **characterised in that** the first pressure P1 is between 2 and 10 bar, preferably less than or equal to 5 bar.

3. Method according to any one of the preceding claims, **characterised in that** the second pressure is between 100 and 700 bar, preferably at least 200 bar.

4. Method according to any one of the preceding claims, **characterised in that** the gas premixture formed from NO and N₂ contains a NO content less than or equal to 8% by volume.

5. Method according to any one of the preceding claims, **characterised in that** the gas premixture formed from NO and N₂ contains a NO content less than or equal to 5% by volume.

6. Method according to any one of the preceding claims, **characterised in that** the gas premixture formed from NO and N₂ contains a NO content of the order of 4% by volume and the first pressure P1 is of the order of 4 bar.

7. Method according to any one of the preceding claims, **characterised in that** step a) is preceded by at least one step chosen from among:
- a gas flushing step d) during which nitrogen is introduced into the vessel,
- a purging step c) during which the internal volume of the vessel is placed in fluidic communication with the ambient atmosphere, and
- a vacuumising step e) during which the internal volume of the vessel is placed at a negative pressure (< atm pressure).

8. Method according to any one of the preceding steps, **characterised in that** step a) is preceded by a plurality of successive and cyclic steps for gas flushing d) and purging c).

9. Method according to any one of the preceding claims, **characterised in that** gas flushing step(s) d) comprise the introduction of nitrogen gas into the vessel until a flushing pressure between 2 and 20 bar, preferably between 2 and 12 bar, is obtained.

10. Method according to any one of the preceding claims, **characterised in that**, during the purging step(s) c), the internal volume of the vessel is in fluidic communication with the atmosphere while the internal pressure of the vessel is greater than a minimum purging pressure (Pmin) such that: 3.5 bar > Pmin > 1 bar.

11. Method according to claim 10, **characterised in that** the minimum purging pressure (Pmin) is between approximately 1.1 and 3 bar.

12. Method according to any one of the preceding claims, **characterised in that**, during at least one vacuumising step e), the internal volume of the vessel is placed at a negative pressure until a negative pressure less than 0.5 bar, preferably less than 0.2 bar, is reached.

13. Method according any one of the preceding claims, **characterised in that** the final NO/N₂ gas mixture contains a NO content less than or equal to 1000 ppm by volume, preferably the final NO/N₂ gas mixture contains a NO content between 200 and 1000 ppm by volume, more preferably between 200 and 800 ppm by volume.

14. Method according to any one of the preceding claims, **characterised in that** it is implemented by means of a manifold (14) for filling gas vessels comprising connection means suitable for filling a plurality of vessels at once.

15. Method according to any one of the preceding claims, **characterised in that** the vessel is a gas cylinder (11, 12, 13) preferably a gas cylinder with the body made of steel, aluminium or an aluminium alloy.
